# EUROPEAN PATENT APPLICATION

(11) **EP 2 998 773 A1**
(43) Date of publication of application: **23.03.2016**
(21) Application number: 14185531.2
(22) Date of filing: 19.09.2014
(51) Int. Cl.: G02B 6/44

(54) **Mounting bracket and fiber optic distribution device**

(71) Applicant: CCS Technology, Inc., Wilmington, DE 19803 (US)
(72) Inventor: Ruda, Michal, 93-377 Lodz (PL); Malolepszy, Bartosz, 92-508 Lodz (PL)
(74) Representative: Sturm, Christoph

(57) **Abstract**

A mounting bracket (15) for a fiber optic distribution device (10), the mounting bracket (15) comprising a first mounting leg (20) through which the mounting bracket (15) is mountable to a side wall (17) of a chassis (16) of a fiber optic management unit (14) of the fiber optic distribution device (10) and a second mounting leg (21) running generally almost perpendicular to the first mounting leg (20) through which the respective mounting bracket (15) is mountable to a mounting bar (12) of a mounting frame (11) of the fiber optic distribution device (10); wherein the first mounting leg (20) of the mounting bracket (15) comprises a set of horizontally oriented, generally parallel running, relatively long first mounting slots (22) for receiving mounting screws (23) extending through the first mounting slots (22) into mounting holes (24) of a side wall (17) of a chassis (16) of the fiber optic management unit (14); wherein the second mounting leg (21) of the mounting bracket (15) comprises a set of generally horizontally and vertically oriented, relatively short second mounting slots (25) for receiving mounting screws extending through the second mounting slots (25) into mounting holes of a mounting bar (12) of the mounting frame (11); wherein the mounting bracket (15) comprises a connection leg (16) positioned between the first mounting leg (20) and the second mounting leg (21), wherein the connection leg (26) is angled relative to the first mounting leg (20) and relative to the second mounting leg (22) with an angle between 30° and 60°.

## Description

The present patent application relates to a mounting bracket for adjustably mounting a fiber optic management unit to a mounting frame of a fiber optic fiber optic distribution device. The present patent application further relates to a fiber optic fiber optic distribution device.

When designing data transmission networks comprising optical fibers, it is necessary to handle optical fibers, especially to connect optical fibers to one another. Junctions between optical fibers can be provided by patch connections and splice connections. Such junctions need to be handled both outside buildings and inside buildings. Outside buildings, junctions between optical fibers are accommodated in so called cable sleeves or street cabinets. Inside buildings, junctions between optical fiber are handled in so called distribution cabinets or distribution frames. So called wall boxes are used for the handling of junctions between optical fibers both outside buildings and inside buildings.

WO 2010/024846 A2 discloses a fiber optic distribution device. The fiber optic distribution device disclosed by WO 2010/024846 A2 comprises a mounting frame having at least two vertically oriented mounting bars. The fiber optic distribution device disclosed by WO 2010/024846 A2 comprises further at least one fiber optic management unit mounted to the mounting frame, wherein the or each fiber optic management unit comprises a chassis, the chassis having opposed side walls and a tray rail guides attached to inwardly facing surfaces of the side walls, the tray rail guides being configured to receive a plurality of vertically stacked fiber optic equipment trays within the chassis of the respective fiber optic management unit in such a way that each of the fiber optic equipment trays is independently translatable in horizontal direction relative to the chassis. The fiber optic distribution device disclosed by WO 2010/024846 A2 comprises further mounting brackets attached to outwardly facing surfaces of the side walls of the chassis of the or each fiber optic management unit for mounting the respective fiber optic management unit to the vertically oriented mounting bars of the mounting frame, wherein each mounting bracket comprises a first mounting leg through which the respective mounting bracket is mountable to a side wall of a chassis of a fiber optic management unit and a second mounting leg running almost perpendicular to the first mounting leg through which the respective mounting bracket is mountable to a mounting bar of the mounting frame.

The mounting frames and fiber optic management units of such fiber optic distribution devices are designed according to available standards that respectively define the vertical height and horizontal width of said units. In most standards the mounting frames are designed to receive fiber optic management units having a horizontal width of e.g. 19 inches (48,26 cm), 21 inches (53,34 cm) or 23 inches (58,42 cm), wherein the vertical height of the fiber optic management units is typically based on a so-called U-unit height of 1.75 inches (4,445 cm).

These standards however do not define the horizontal depth position of the fiber optic management units with the mounting frame, meaning that position of fiber optic management units with respect to a front or back plane of the fiber optic distribution device can be different for fiber optic distribution devices delivered by different suppliers. That might cause a situation where the fiber optic management units protrude to front doors of the fiber optic distribution device or similar unwanted situations.

The present application is based on the object to provide a novel mounting bracket providing a flexible mounting position of a fiber optic management unit within a fiber optic distribution device and to provide a novel fiber optic distribution device.

The mounting bracket according to the present patent application is defined in claim 1.

The first mounting leg of the mounting bracket comprises a set of horizontally oriented, parallel running, relatively long first mounting slots for receiving mounting screws extending through the first mounting slots into mounting holes of a side wall of a chassis of the fiber optic management unit. The second mounting leg of each mounting bracket comprises a set of horizontally and vertically oriented, relatively short second mounting slots for receiving mounting screws extending through the second mounting slots into mounting holes of a mounting bar of the mounting frame. Each mounting bracket comprises a connection leg positioned between the respective first mounting leg and the respective second mounting leg, wherein the connection leg is angled relative to the first mounting leg and relative to the second mounting leg with an angle between 30° and 60°.

The mounting bracket allows a flexible installation of a fiber optic management unit at a mounting frame of a fiber optic distribution device. The mounting bracket allows for front or rear mounting of the fiber optic management unit at a mounting frame, both having option to adjust the position of the fiber optic management unit. The position of the fiber optic management unit is easily adjustable. The solution is simple and universal. The same can be used for fiber optic management units having a horizontal width of e.g. 19, 21 or 23 inches and preferably having a vertical height based on a so-called U-unit height of 1.75 inches.

According to a preferred embodiment, the second mounting leg of the mounting bracket further comprises an array of mounting holes for mounting fiber optic accessory to the mounting bracket, wherein said array of mounting holes is positioned between the set of horizontally and vertically oriented second mounting slots of the respective second mounting leg and the connection leg of the respective mounting bracket. This provides additional place e.g. to organize incoming fiber optic cables and/or fiber bundles.

Preferably, the fiber optic accessory is mountable to the second legs of the mounting brackets by screws acting together with cage nuts snapped into mounting holes of said array of mounting holes. This allows an easy and secure mounting of the fiber optic accessory.

Embodiments of the fiber optic distribution device are given in the dependent claims and the description below. Exemplary embodiments will be explained in more detail with reference to the drawing, in which:
- Figure 1: shows a mounting frame of a fiber optic distribution device together with a fiber optic management unit mounted to said mounting frame through mounting brackets in a first orientation;
- Figure 2: shows the mounting frame of the fiber optic distribution device together with the fiber optic management unit mounted to said mounting frame through the mounting brackets in a second orientation;
- Figure 3: shows a detail of Figure 1, namely the fiber optic management unit together with the mounting brackets;
- Figure 4: shows a detail of Figure 2, namely the fiber optic management unit together with the mounting brackets;
- Figure 5: shows the detail of Figure 3 in an exploded view;
- Figure 6: shows a detail of Figure 5, namely one mounting bracket;
- Figure 7: shows another detail of a fiber optic distribution device;
- Figure 8: shows a detail of a mounting bracket together with cage nuts; and
- Figure 9: shows the detail of Figure 8 together with a fiber optic accessory.

The present patent application relates to a fiber optic distribution device and to a mounting bracket for such a fiber optic distribution device.

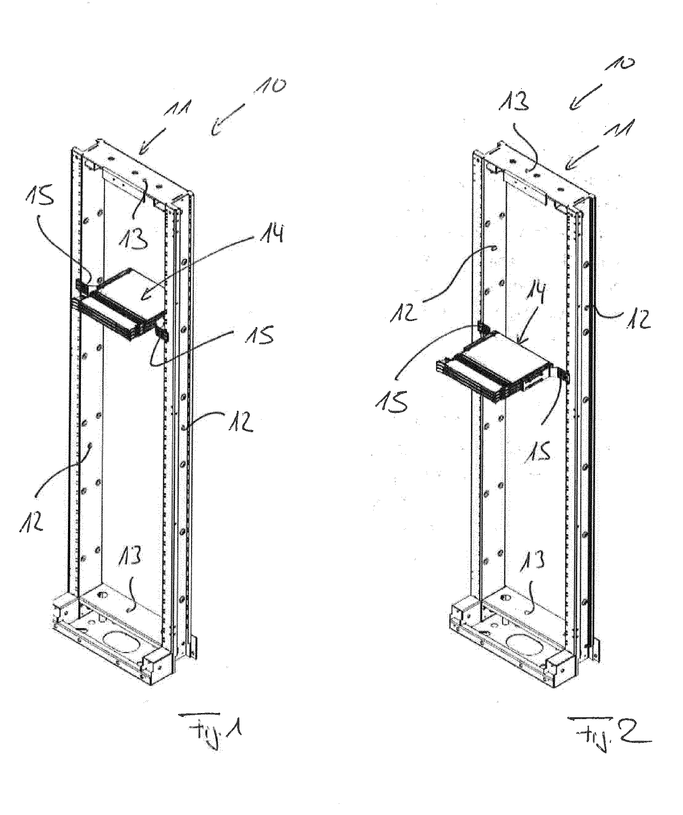

Figures 1 and 2 both show details of a fiber optic distribution device 10. The fiber optic distribution device 10 comprises a mounting frame 11. The mounting frame 11 has at least two vertically oriented mounting bars 12. The vertically oriented mounting bars 12 of the mounting frame 11 are preferably connected by horizontally oriented connection bars 13.

The fiber optic distribution device 10 comprises further at least one fiber optic management unit 14. The or each fiber optic management unit 14 is mounted to the mounting frame 12, namely to the vertically oriented mounting bars 12, by one or more mounting brackets 15.

In Figures 1 and 2 the fiber optic management unit 14 is mounted to two mounting bars 12 by two mounting brackets 15, namely to the left hand sided mounting bar 12 by a first mounting bracket 15 and to the right hand sided mounting bar 12 by a second mounting bracket 15.

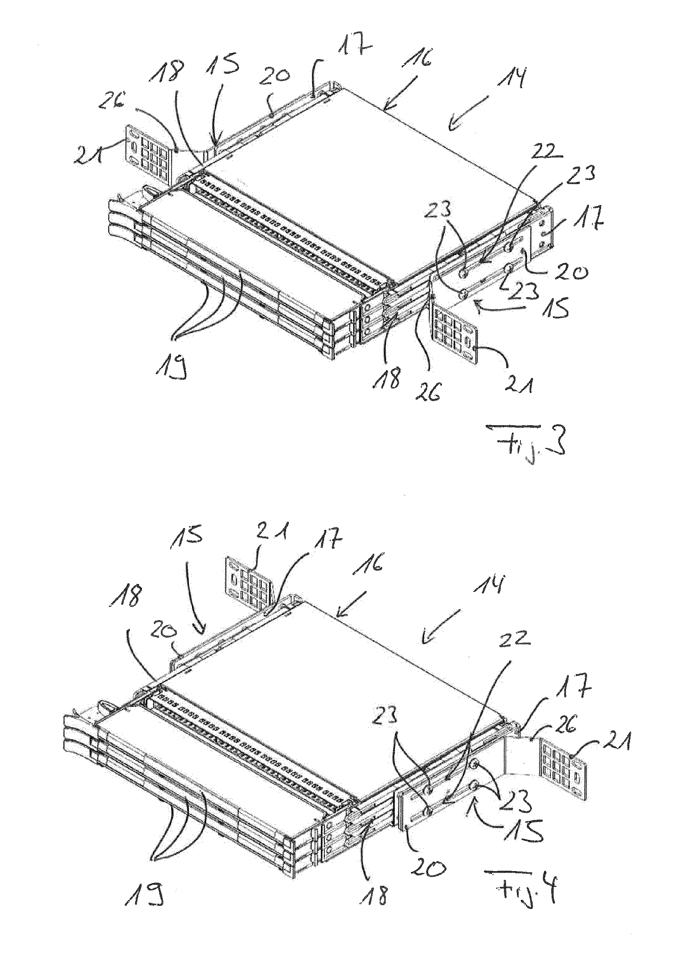

Figures 1 and 2 show the fiber optic management unit 14 in two different mounting options, namely Figure 1 in a so-called front mounting option and Figure 2 in a so-called rear mounting option. Both mounting options of the fiber optic management unit 14 can be provided with the same mounting brackets 15. Figures 3 and 4 both show the fiber optic management units 14 of Figures 1 and 2 together with the mounting brackets 15 providing the respective mounting option.

Each fiber optic management unit 14 comprises a chassis 16. The chassis 16 of each fiber optic management unit 14 comprises side walls 17.

In the shown embodiment, the fiber optic management unit 14 comprises tray rail guides 18 attached to inwardly facing surfaces of the side walls 17. The tray rail guides 18 of the fiber optic management unit 14 is configured to receive a plurality of vertically stacked fiber optic equipment trays 19 within the chassis 16 of the respective fiber optic management unit 14 in such a way that each of the stacked fiber optic equipment trays 19 is independently translatable in horizontal direction relative to the chassis 16 of the respective fiber optic management unit 14.

In the shown embodiment the fiber optic management unit 14 is configured to receive three such vertically stacked fiber optic equipment trays 19.

The fiber optic distribution device 10 comprises further the mounting brackets 15 for mounting the fiber optic management unit 14 to the mounting bars 12 of the mounting frame 11. The mounting brackets 15 are attached to outwardly facing surfaces of the side walls 17 of the chassis 16 of the fiber optic management unit 14 for mounting the fiber optic management unit 14 to the vertically oriented mounting bars 12 of the mounting frame 11.

Each mounting bracket 15 comprises a first mounting leg 20 through which the respective mounting bracket 17 is mountable to a side wall 17 of a chassis 16 of a respective fiber optic management unit 14. Each mounting bracket 15 comprises further a second mounting leg 21 running preferably perpendicular to the first mounting leg 20 through which the respective mounting bracket 15 is mountable to a respective mounting bar 12 of the mounting frame 11.

The first mounting leg 20 of each mounting bracket 15 comprises a set of, in the shown embodiment two, horizontally oriented, preferably parallel running, relatively long first mounting slots 22 for receiving mounting screws 23 extending through the first mounting slots 22 into mounting holes 24 of a side wall 17 of a chassis 16 of the respective fiber optic management unit 14.

The second mounting leg 21 of each mounting bracket 15 comprises a set of horizontally and vertically oriented, relatively short second mounting slots 25 for receiving mounting screws (not shown) extending through the second mounting slots (25) into mounting holes of a mounting bar 12 of the mounting frame 11.

Each mounting bracket 15 comprises further a connection leg 26 positioned between the respective first mounting leg 20 and the respective second mounting leg 21. The connection leg 26 is angled relative to the first mounting leg 20 and relative to the second mounting leg 21 with an angle between 30° and 60°. Preferably, the connection leg 26 of each mounting bracket 15 is angled relative to the first mounting leg 20 and relative to the second mounting leg 21 with an angle of 45°.

The above design of the mounting bracket 15 allows a flexible and universal installation of a fiber optic management unit 14 at a mounting frame 11 of a fiber optic distribution device 10.

The mounting bracket 15 allows for front or rear mounting of the fiber optic management unit 14 at a mounting frame 11, both having option to adjust the position of the fiber optic management unit 14. The position of the fiber optic management unit 14 is easily adjustable.

The solution is simple and universal.

The mounting bracket 15 can especially be used for fiber optic management units 14 having a horizontal width of e.g. 19, 21 or 23 inches and preferably having a vertical height based on a so-called U-unit height of 1.75 inches.

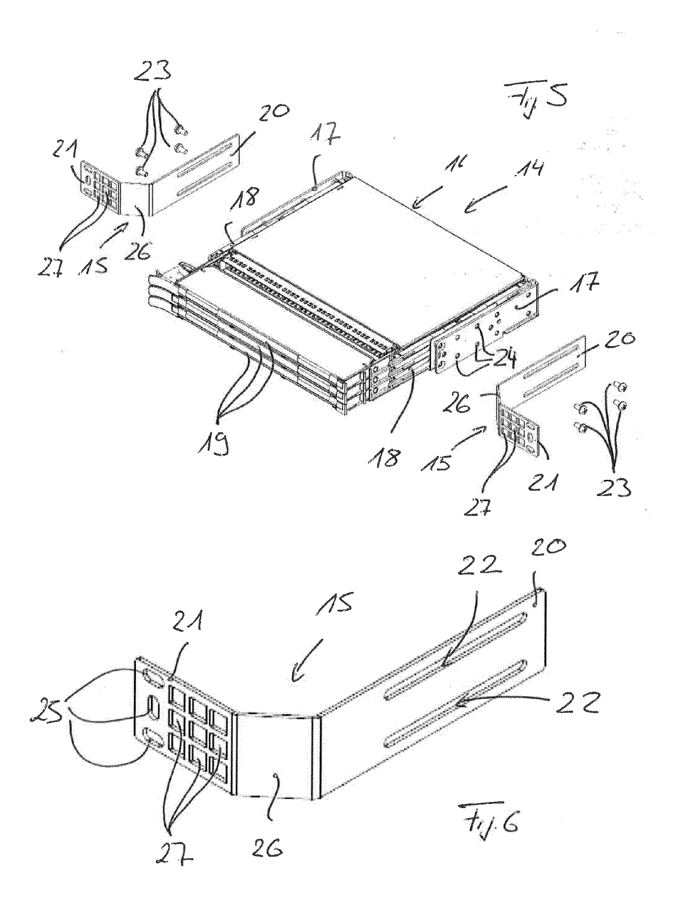

As can be best seen in Figures 3, 4 and 5, each mounting bracket 15 is attached to a respective side wall 17 of the chassis 16 of the shown fiber optic management unit 14 by set of mounting screws 23, in the shown embodiment by set of four mounting screws 23. Each mounting screw 23 extends through one of the mounting slots 22 provided by the first mounting leg 20 of the respective mounting bracket 15 into one of the mounting holes 24 of the respective side wall 17 of the chassis 16 of the shown fiber optic management unit 14.

When the mounting screws 23 are loose, the position of the mounting brackets 15 can be adjusted until the right position is found. Then, by tightening the mounting screws 23 the position with respect to the fiber optic management unit 14 is fixed. The relatively long mounting slots 15 provide a degree of flexibility and allow a change of the relative position of the fiber optic management unit 14 to the mounting brackets 15, thus allowing a position change of the fiber optic management unit 14 with respect to the mounting frame 11 after initial installation.

The mounting brackets 15 can be attached in a reverse position to the side walls 17 of the chassis 16 of the fiber optic management unit 14 thereby allowing to change between the front mounting option and the rear mounting option of the fiber optic management unit 14 at the mounting frame 11. In the rear mounting option shown in Figures 2, 4 it is possible to install the fiber optic management unit 14 directly to a mounting wall (not shown) instead of mounting the same to the mounting frame 11.

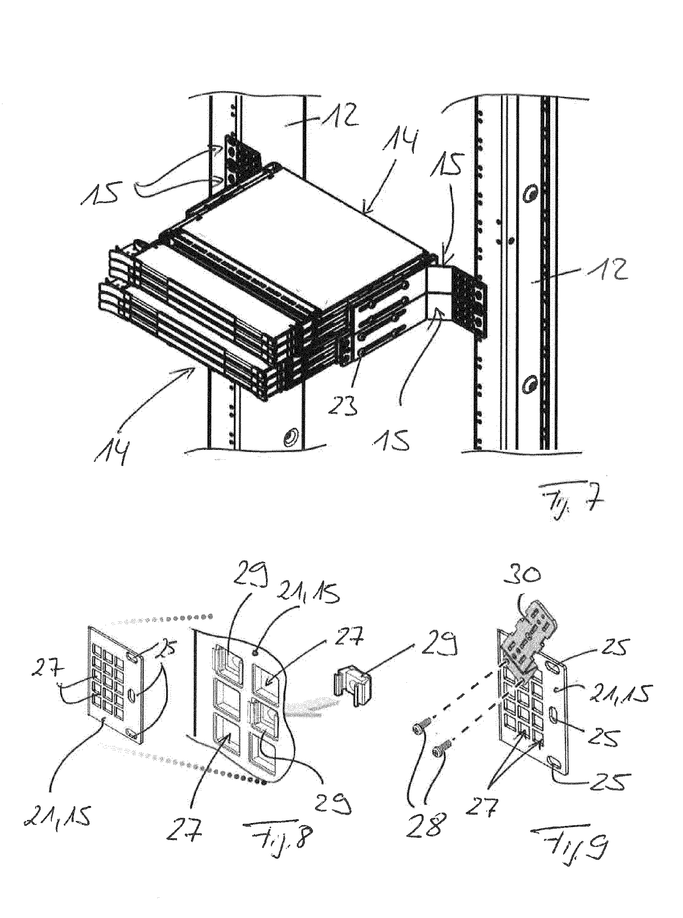

Figure 7 shows two fiber optic management units 14 mounted to the mounting bars 12 of the mounting frame 11 in the rear mounting option, wherein the position of two fiber optic management units 14 with respect to the mounting bars 15 and thereby with respect to the mounting frame 11 is different.

The connection legs 26 being angled relative to the first mounting leg 20 and relative to the second mounting leg 21 of the respective mounting bracket 15 allow a horizontal movement of the fiber optic management units 14 relative to the mounting frame 11 when the mounting screws 23 are loose avoiding a collision with to the mounting bars 15 of the mounting frame 11.

The second mounting leg 21 of each mounting bracket 15 further comprises an array of mounting holes 27 for mounting fiber optic accessory like furcation adapters, strain relief elements or the like to the respective mounting bracket 15. Said array of mounting holes 27 is positioned between the set of horizontally and vertically oriented second mounting slots 25 of the respective second mounting leg 21 and the connection leg 26 of the respective mounting bracket 15.

The array may comprise any number of mounting holes 27, as non-limiting examples at least six, and preferably at least nine, mounting holes 27. The mounting holes 27 may be positioned in at least two, preferably in at least three, vertically oriented columns and at least two, preferably in at least three, horizontally oriented rows thereby providing a matrix of mounting holes 27.

According to Figures 1 to 7, each array of mounting holes 27 comprises nine mounting holes 27 being positioned in three vertically oriented columns and three horizontally oriented rows.

Figures 8 and 9 both show a second mounting leg 21 of a mounting bracket 15 comprising fifteen mounting holes 27 being positioned in three vertically oriented columns and five horizontally oriented rows.

A fiber optic accessory may be mounted to the respective mounting bracket 15, as an example, mountable to the second leg 21 of the respective mounting bracket 25 by cable binders received by mounting holes 27 of said array of mounting holes 27. Preferably, fiber optic accessory like a strain relief element 30 (see Figure 9) to be mounted to the respective mounting bracket 15 is mountable to the second leg 21 of the respective mounting bracket 25 by screws 28 (see Figure 9) acting together with cage nuts 29 (see Figures 8, 9) snapped into mounting holes 27 of said array of mounting holes 27.

### List of reference numerals

- 10: fiber optic distribution device
- 11: mounting frame
- 12: mounting bar
- 13: connection bar
- 14: fiber optic management unit
- 15: mounting bracket
- 16: chassis
- 17: side wall
- 18: tray rail guide
- 19: fiber optic equipment tray
- 20: mounting leg
- 21: mounting leg
- 22: mounting slot
- 23: mounting screw
- 24: mounting hole
- 25: mounting slot
- 26: connection leg
- 27: mounting hole
- 28: screw
- 29: cage nut
- 30: fiber optic accessory

## Claims

1. A mounting bracket (15) for a fiber optic distribution device (10), wherein the mounting bracket (15) comprises a first mounting leg (20) through which the mounting bracket (15) is mountable to a side wall (17) of a chassis (16) of a fiber optic management unit (14) of the fiber optic distribution device (10), and wherein the mounting bracket (15) comprises a second mounting leg (21) running generally almost perpendicular to the first mounting leg (20) through which the respective mounting bracket (15) is mountable to a mounting bar (12) of a mounting frame (11) of the fiber optic distribution device (10);
**characterized in that**
the first mounting leg (20) of the mounting bracket (15) comprises a set of horizontally oriented, generally parallel running, relatively long first mounting slots (22) for receiving mounting screws (23) extending through the first mounting slots (22) into mounting holes (24) of a side wall (17) of a chassis (16) of the fiber optic management unit (14);
the second mounting leg (21) of the mounting bracket (15) comprises a set of generally horizontally and vertically oriented, relatively short second mounting slots (25) for receiving mounting screws extending through the second mounting slots (25) into mounting holes of a mounting bar (12) of the mounting frame (11);
the mounting bracket (15) comprises a connection leg (16) positioned between the first mounting leg (20) and the second mounting leg (21), wherein the connection leg (26) is angled relative to the first mounting leg (20) and relative to the second mounting leg (22) with an angle between 30° and 60°.

2. The mounting bracket of claim 1, **characterized in that** the second mounting leg (21) of the mounting bracket (15) further comprises an array of mounting holes (27) for mounting fiber optic accessory (30) to the mounting bracket (15), wherein said array of mounting holes (27) is positioned between the set of generally horizontally and vertically oriented second mounting slots (25) of the second mounting leg (21) and the connection leg (26) of the mounting bracket (15).

3. The mounting bracket of claim 2, **characterized in that** the array comprises at least six mounting holes (27) being positioned in at least two vertically oriented columns and at least three horizontally oriented rows thereby providing a matrix of mounting holes (27).

4. The mounting bracket of claim 3, **characterized in that** the array comprises at least nine mounting holes (27) being positioned in at least three vertically oriented columns and at least three horizontally oriented rows.

5. The mounting bracket of one of claims 2 to 4, **characterized in that** the fiber optic accessory (30) is mountable to the second legs (21) of the mounting bracket (15) by cable binders received by mounting holes (27) of said array of mounting holes (27).

6. The mounting bracket of one of claims 2 to 5, **characterized in that** the fiber optic accessory (30) is mountable to the second leg (21) of the mounting bracket (15) by screws (28) acting together with cage nuts (29) snapped into mounting holes (27) of said array of mounting holes (27).

7. The mounting bracket of one of claims 1 to 6, **characterized in that** the connection leg (26) of the mounting bracket (15) is angled relative to the first mounting leg (20) and relative to the second mounting leg (21) with an angle of 45°.

8. A fiber optic distribution device (10), comprising:
a mounting frame (11) having at least two vertically oriented mounting bars (12);
at least one fiber optic management unit (14) mounted to the mounting frame (11), wherein the or each fiber optic management unit (14) comprises a chassis (16), the chassis (16) having opposed side walls (17);
mounting brackets (15) attached to outwardly facing surfaces of the side walls (17) of the chassis (16) of the or each fiber optic management unit (14) for mounting the respective fiber optic management unit (14) to the vertically oriented mounting bars (12) of the mounting frame (11),
**characterized by**
mounting brackets (15) as defined in one of claims 1 to 7.

9. The fiber optic distribution device of claim 8, **characterized in that** the or each fiber optic management unit (14) comprises tray rail guides (18) attached to inwardly facing surfaces of the side walls (17), the tray rail guides (18) of the or each fiber optic management unit (14) being configured to receive a plurality of vertically stacked fiber optic equipment trays (19) within the chassis (16) of the respective fiber optic management unit (14) in such a way that each of the stacked fiber optic equipment trays (19) is independently translatable in horizontal direction relative to the chassis (16) of the respective fiber optic management unit (14).
